# FASCICULE DE BREVET EUROPEEN

(11) **EP 3 147 026 B1**
(45) Date de publication et mention de la délivrance du brevet: **14.11.2018**
(21) Numéro de dépôt: 16190080.8
(22) Date de dépôt: 22.09.2016
(51) Int. Cl.: B01L 1/02, B25J 21/02

(54) **DISPOSITIF DE CONNEXION ÉTANCHE ENTRE DEUX ENCEINTES**
DICHTE VERBINDUNGSVORRICHTUNG ZWISCHEN ZWEI BEHÄLTERN
DEVICE FOR TIGHT CONNECTION BETWEEN TWO ENCLOSURES

(30) Priorité: 22.09.2015 FR 1558917
(43) Date de publication de la demande: 29.03.2017
(73) Titulaire: JCE Biotechnology, 03270 Hauterive (FR)
(72) Inventeur: GOHIER, Eric, 03200 Vichy (FR)
(74) Mandataire: Lavoix

(56) Documents cités:
- EP-A1- 2 091 051
- WO-A1-03/057431
- WO-A1-2013/110745
- FR-A1- 2 613 526
- US-A1- 2006 196 573

## Description

La présente invention concerne un dispositif de connexion étanche entre deux enceintes.

Le terme enceinte désigne ici un récipient, notamment un conteneur, ou une chambre ou encore un local, présentant un accès obturable de manière étanche. Cette enceinte définit un volume de préparation, de stockage et/ou de manipulation de produits ne devant pas être en contact avec l'extérieur ou avec un utilisateur. Il s'agit par exemple de produits dangereux comme certains produits biologiques, chimiques ou radioactifs. Une telle enceinte permet de réaliser certaines manipulations sur ces produits sans que le manipulateur soit en contact direct avec les produits. La manipulation s'effectue par l'intermédiaire d'outils ou de gants, le cas échéant fixés sur l'enceinte. Les manipulations des produits sont ainsi réalisées en isolant l'intérieur de l'enceinte vis-à-vis de l'extérieur.

Pour certaines manipulations, il convient de connecter de manière étanche deux enceintes l'une avec l'autre. Cette connexion s'effectue en préservant la stérilité et/ou le confinement d'au moins une des deux enceintes, sans contact direct avec l'extérieur. Une des enceintes à connecter peut, par exemple, être un récipient de collecte de déchets, typiquement un conteneur.

Afin d'accéder à l'intérieur d'une enceinte, celle-ci est munie d'une bride, qui délimite une ouverture traversante reliant l'intérieur et l'extérieur de l'enceinte et qui porte de manière mobile une porte de fermeture étanche de l'ouverture précitée. Cette porte est généralement manoeuvrable par l'utilisateur à partir de l'intérieur de l'enceinte. Il convient, lorsqu'on souhaite connecter deux enceintes, de même sorte ou de sortes différentes, d'assurer une liaison évitant toute pollution vis-à-vis de l'extérieur. Pour cela, il est connu de connecter les brides des deux enceintes de manière jointive. Ainsi, la stérilité d'une enceinte de manipulation doit être préservée lorsqu'on connecte cette enceinte à un récipient de type conteneur à déchets, pour évacuer certains produits hors de l'enceinte de manipulation.

Par EP-A-2 091 051, on connaît un exemple de dispositif de connexion du type de l'invention. Ce type de dispositif de connexion est prévu pour assembler l'une à l'autre les brides respectives de deux enceintes à connecter, moyennant le centrage des deux brides l'une avec l'autre et l'entraînement rotatif d'une des brides par rapport à l'autre : lors de cet assemblage, d'une part, les deux brides se connectent fixement l'une à l'autre, typiquement par l'engagement d'un système à baïonnette dédié, et, d'autre part, la porte d'une des deux enceintes se lie fixement à la porte de l'autre enceinte, typiquement par l'engagement d'un système à baïonnette dédié, tout en se désolidarisant de sa bride associée, typiquement par le désengagement d'un système à baïonnette dédié qui, jusqu'alors, retenait cette porte en position fermée sur cette bride.

WO 2013/110745 divulgue un dispositif de connexion de même type, dont le système à baïonnette, prévu pour connecter l'une à l'autre les brides d'enceinte du dispositif, comprend des oreilles, solidaires d'une des brides, et des gorges de réception des oreilles, solidaires de l'autre bride : pour faciliter l'introduction de chaque oreille dans la gorge qui lui est associée, une extrémité de chaque gorge est délimitée par une partie inclinée formant rampe, contre laquelle l'oreille glisse pour se loger dans la gorge lors de la connexion entre les deux brides.

Ceci étant rappelé, l'invention s'intéresse plus spécifiquement à une problématique liée à la déconnexion des deux enceintes. En effet, notamment lorsque les enceintes, pendant qu'elles sont connectées l'une à l'autre, sont mises en dépression, ce qui est fréquent pour une enceinte de manipulation, la fermeture étanche de leur porte en vue de leur déconnexion induit un effet ventouse entre les brides ou entre leur joint respectivement en contact avec l'autre bride : cet effet ventouse oppose une résistance, parfois très forte, à l'écartement relatif des brides lors de leur déconnexion. Ainsi, l'utilisateur, qui a désengagé le système à baïonnette entre les deux brides de deux enceintes à déconnecter, peine à écarter les brides l'une de l'autre et a l'impression que ces brides sont, en quelque sorte, collées l'une à l'autre : l'utilisateur est contraint d'appliquer un effort de « décollement », pour surmonter la résistance de l'effet ventouse entre les brides. Cette situation se rencontre typiquement dans le cas des conteneurs dits autoclaves, c'est-à-dire les conteneurs à paroi rigide, notamment en acier inoxydable, qui sont prévus pour être passés en autoclave aux fins de leur stérilisation : en effet, du fait de leur rigidité, ces conteneurs n'autorisent aucun ajustement de leur volume interne qui pourrait compenser leur mise en dépression avant déconnexion vis-à-vis d'une enceinte de manipulation et ainsi limiter l'effet ventouse entre leur bride et la bride de l'enceinte de manipulation.

Pour contourner ce problème, il est connu que les enceintes, en particulier les conteneurs autoclaves, soient équipées, le cas échéant au niveau de leur dispositif de connexion, d'un orifice d'admission d'air à travers lequel de l'air extérieur préalablement filtré peut pénétrer dans l'enceinte ou entre les joints de leur dispositif de connexion : l'effet ventouse s'en trouve limité, par équilibrage de pression avec l'extérieur. Bien que ces orifices soient généralement pourvus de filtres visant à limiter les possibilités de contamination vers l'extérieur, ils constituent un risque réel de rupture de l'étanchéité de l'enceinte vis-à-vis de l'extérieur, sans neutraliser complètement l'effet ventouse précité.

Le but de la présente invention est d'améliorer les dispositifs de connexion évoqués ci-dessus, pour qu'ils soient plus faciles à déconnecter, sans risquer une contamination des enceintes que ces dispositifs permettent de connecter.

A cet effet, l'invention a pour objet un dispositif de connexion étanche entre deux enceintes, tel que défini à la revendication 1.

L'idée à la base de l'invention est de prévoir, entre les deux brides du dispositif de connexion, une rampe d'écartement d'une bride par rapport à l'autre, qui est sollicitée lorsque les brides sont entraînées en rotation l'une par rapport à l'autre autour de leur axe de centrage commun aux fins de leur déconnexion. De cette façon, lors de cet entraînement en rotation, l'une des brides glisse contre la rampe dont est pourvue l'autre bride et, par effet de rampe, s'éloigne dans la direction de l'axe de centrage. On comprend que dans le cas où un effet ventouse retient axialement les brides l'une contre l'autre, il est surmonté par l'effet d'écartement axial induit par la rampe, que l'on peut ainsi qualifier de rampe de décollement des brides. En d'autres termes, cette rampe favorise la création d'une prise d'air entre les brides, contrecarrant l'effet ventouse. Pour l'utilisateur, la manipulation de déconnexion du dispositif conforme à l'invention est inchangée par rapport à celle d'un dispositif dépourvu de cette rampe, en ne demandant pas d'effort supplémentaire significatif : pour déconnecter les enceintes, l'utilisateur entraîne l'une des brides en rotation par rapport à l'autre pour neutraliser les moyens de connexion qui, jusqu'alors, maintenaient connectées les brides l'une à l'autre, ce qui induit, sous l'effet de la rampe, un écartement relatif des brides. Le bras de levier résultant du couple d'entraînement en rotation est avantageusement tel au niveau de la rampe que le glissement contre la rampe ne demande aucun effort supplémentaire perceptible pour l'utilisateur, tout en permettant de surmonter la résistance, même forte, d'un potentiel effet ventouse entre les brides.

Des caractéristiques additionnelles avantageuses du dispositif de connexion conforme à l'invention sont spécifiées aux revendications dépendantes.

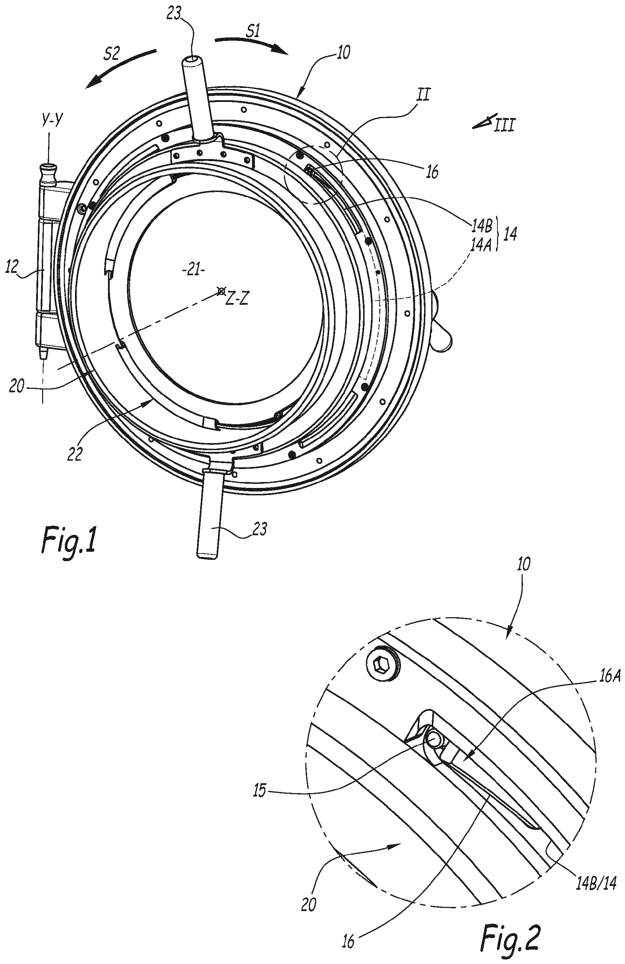

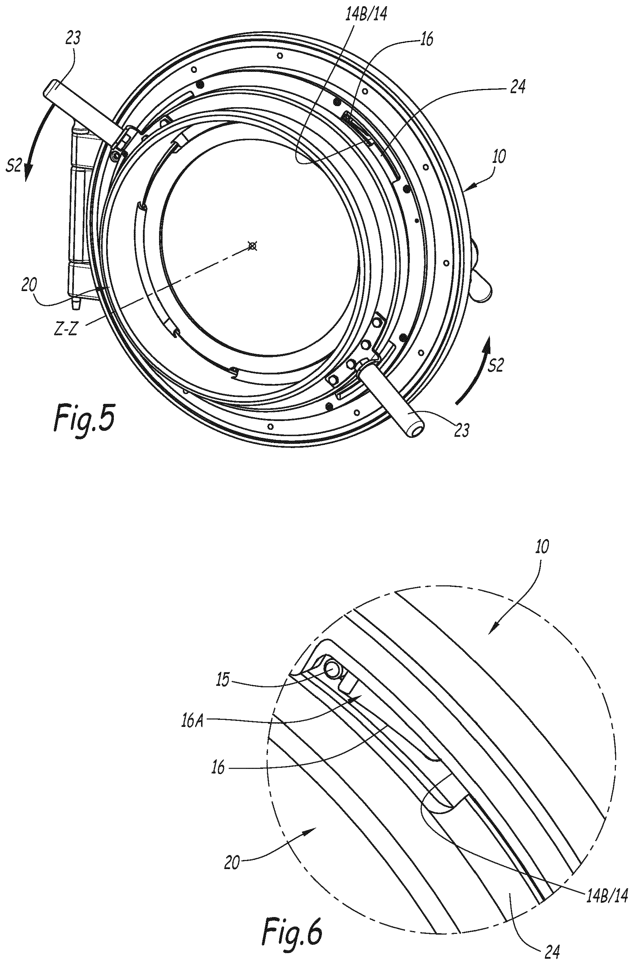

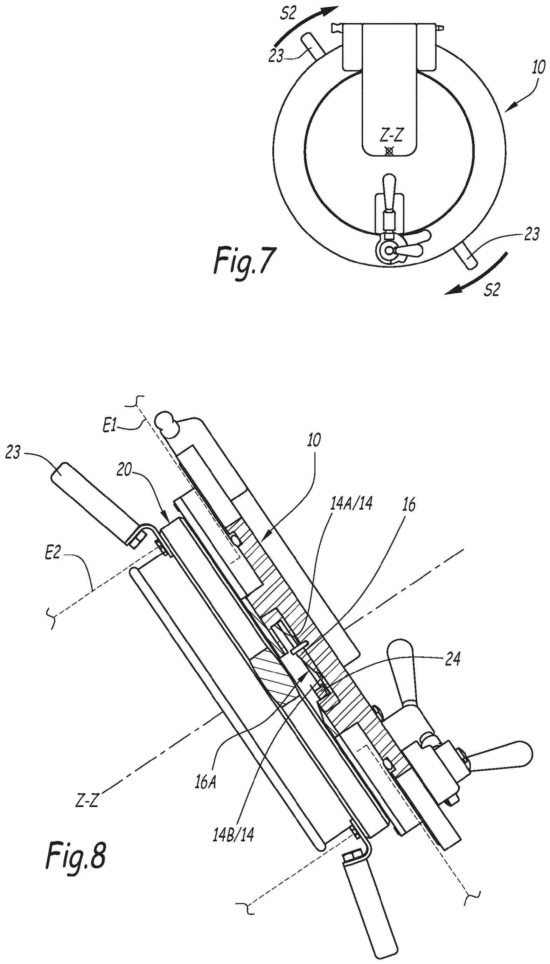

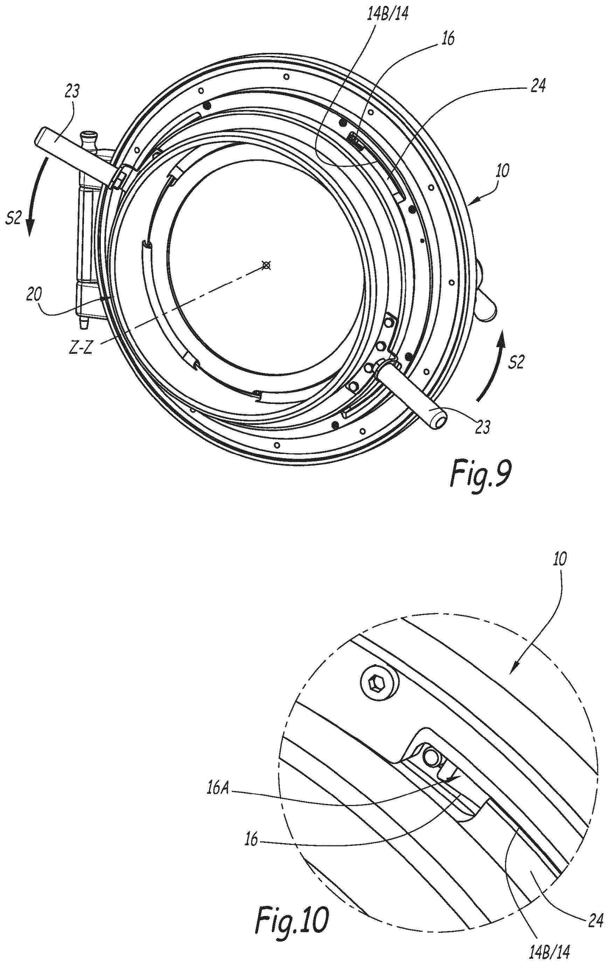

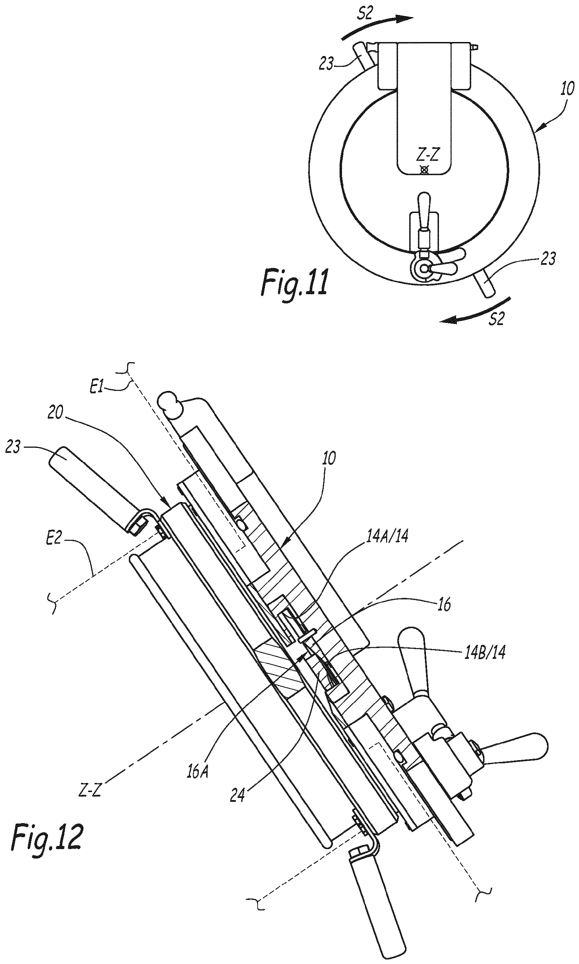

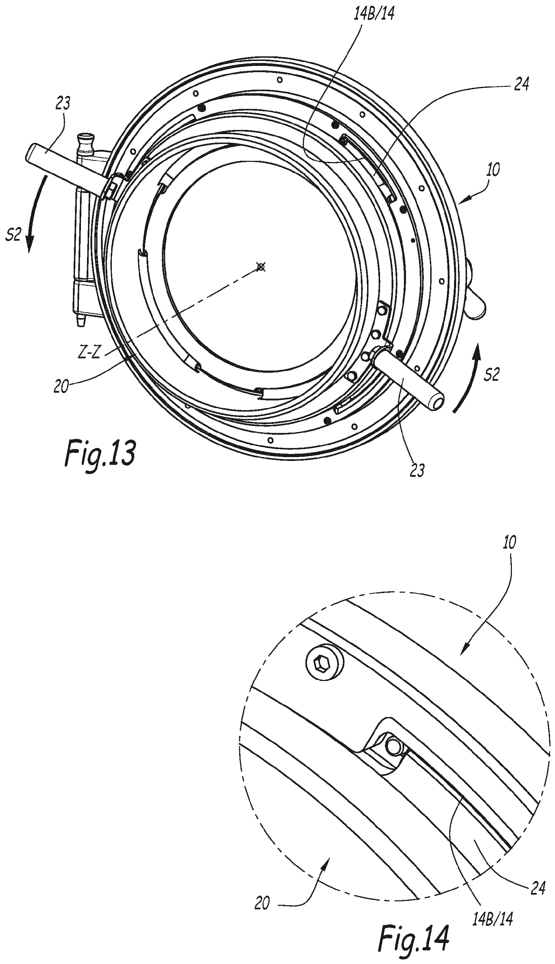

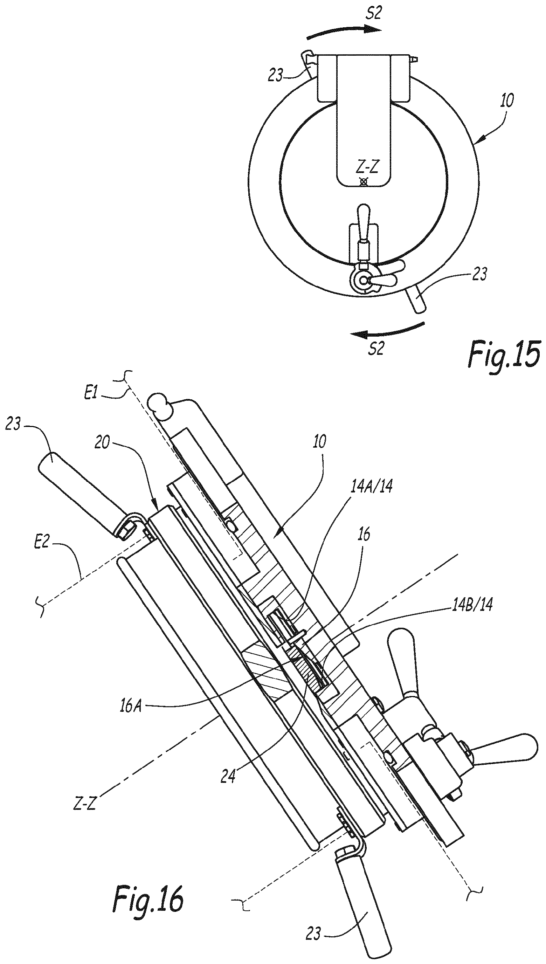

L'invention sera mieux comprise à la lecture de la description qui va suivre, donnée uniquement à titre d'exemple et faite en se référant aux dessins sur lesquels :
- la figure 1 est une vue en perspective d'un dispositif de connexion conforme à l'invention, montré dans une configuration connectée des deux brides de ce dispositif ;
- la figure 2 est une vue à plus grande échelle du détail cerclé II sur la figure 1 ;
- la figure 3 est une vue en élévation selon la flèche III de la figure 1 ;
- la figure 4 est une coupe selon la ligne IV-IV de la figure 3 ;
- les groupes des figures 5 à 8, 9 à 12 et 13 à 16 illustrent le dispositif de la figure 1 dans trois configurations respectives différentes, le groupe des figures 13 à 16 étant associé à une configuration déconnectée des deux brides du dispositif tandis que le groupe des figures 5 à 8 et le groupe des figures 9 à 12 sont respectivement associés à des configurations successives intermédiaires entre la configuration connectée des figures 1 à 4 et la configuration déconnectée des figures 13 à 16, étant remarqué que les première, deuxième, troisième et quatrième figures de chacun de ces trois groupes sont respectivement similaires aux figures 1 à 4 ; et

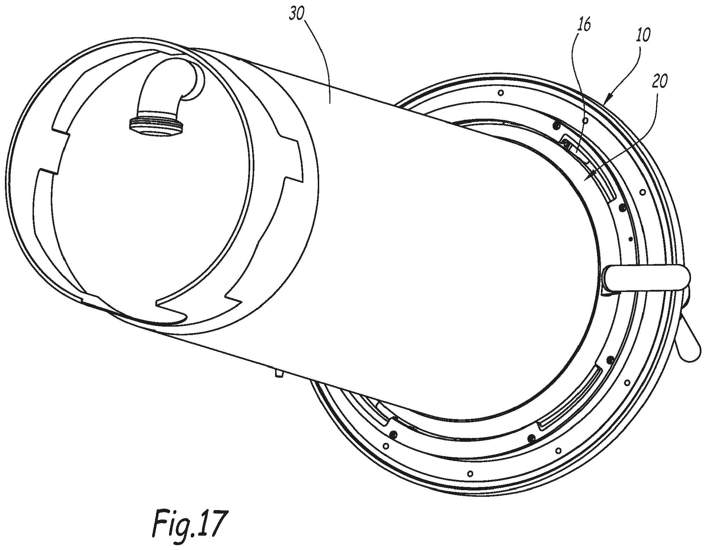

- la figure 17 est une vue en perspective du dispositif de connexion de la figure 1, mis en oeuvre avec une enceinte de type conteneur autoclave.

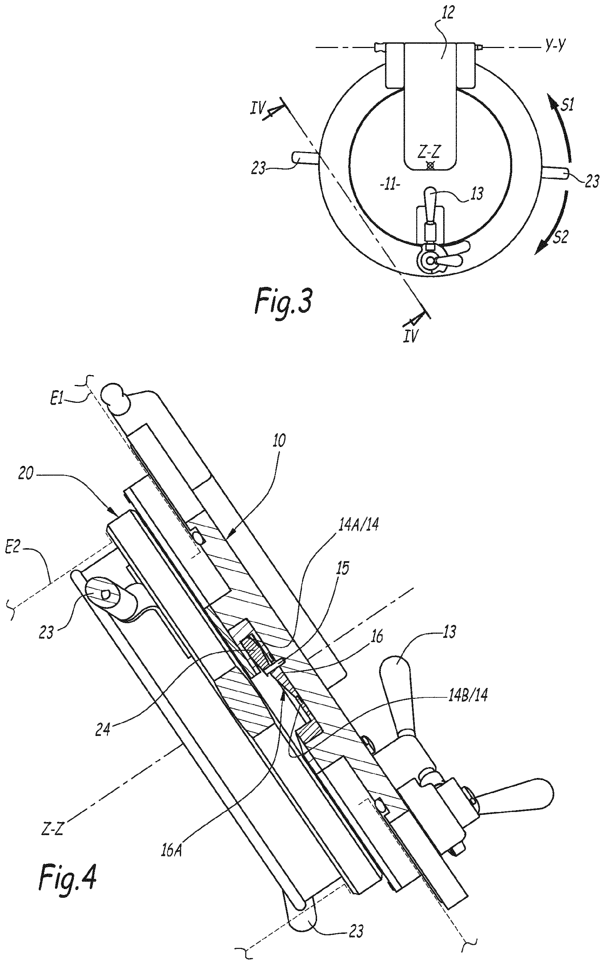

Sur les figures 1 à 16 est représenté un dispositif de connexion étanche entre deux enceintes. Comme indiqué dans la partie introductive du présent document, la forme de réalisation de chacune des deux enceintes précitées n'est pas limitative : chacune de ces enceintes peut ainsi être un récipient, notamment un conteneur, un local, une chambre, etc. Aussi, sur les figures 1 à 16, ces deux enceintes ne sont pas représentées, sauf sur les figures 4, 8, 12 et 16 sur lesquelles les enceintes sont indiquées en pointillés de manière partielle et schématique, sous les références respectives E1 et E2.

Le dispositif de connexion comporte une bride 10 associée à l'enceinte E1 et une bride 20 associée à l'enceinte E2. Chaque bride 10, 20 délimite une ouverture traversante, qui présente un contour fermé et qui relie l'un à l'autre l'intérieur et l'extérieur de l'enceinte correspondante E1, E2. Chaque bride 10, 20 définit ainsi un axe central, sur lequel est centrée son ouverture traversante, les axes respectifs des deux brides 10 et 20 étant sensiblement alignés lorsque les brides 10 et 20 sont assemblées l'une à l'autre pour connecter entre elles les enceintes E1 et E2, en formant ainsi un axe géométrique commun, qui est référencé Z-Z sur les figures.

Dans l'exemple de réalisation considéré sur les figures, chacune des brides 10 et 20 présente une forme globale annulaire, centrée sur l'axe Z-Z et à base circulaire, étant remarqué que, à titre de variantes non représentées, d'autres profils géométriques sont envisageables pour la périphérie intérieure de ces brides, c'est-à-dire leur périphérie tournée vers l'axe Z-Z, ainsi que pour la périphérie extérieure des brides, c'est-à-dire leur périphérie tournée à l'opposé de l'axe Z-Z. En pratique, le corps principal annulaire de chacune des brides 10 et 20 est réalisé d'une seule pièce ou est constitué de plusieurs pièces assemblées rigidement les unes aux autres, la ou les pièces étant en métal et/ou en matière plastique rigide, notamment en thermoplastique.

De manière connue en soi et non détaillée ici, chacune des brides 10 et 20 est solidarisée à demeure et de manière étanche sur une paroi de l'enceinte correspondante E1, E2, à travers laquelle s'étend l'ouverture traversante délimitée par la bride.

Sur chacune des brides 10 et 20 est montée une porte 11, 21 de manière mobile entre une position fermée, qui est montrée sur les figures et dans laquelle la porte 11, respectivement 21, obture de manière étanche l'ouverture de la bride 10, respectivement 20, et une position ouverte, qui n'est pas montrée sur les figures et dans laquelle la porte 11, respectivement 21, est écartée de la bride 10, respectivement 20, pour accéder à l'enceinte E1, respectivement E2, via l'ouverture de la bride correspondante. De manière connue en soi et non détaillée ici, l'étanchéité de l'obturation de la bride 10, respectivement 20, par la porte 11, respectivement 21, lorsque cette porte est en position fermée, est assurée par tout moyen d'étanchéité interposé entre la porte et la bride associées, tel qu'un joint, solidaire de la porte et/ou de la bride.

A titre d'exemple non limitatif, correspondant à la forme de réalisation considérée sur les figures, la porte 11 est déplaçable entre ses positions fermée et ouverte par rapport à la bride 10 par basculement autour d'un axe Y-Y qui s'étend dans une direction orthoradiale à l'axe Z-Z : la liaison basculante entre la porte 11 et la bride 10 est réalisée, par exemple, par un mécanisme à charnière 12, qui définit l'axe de basculement Y-Y et dont les deux parties constitutives, mobiles l'une par rapport à l'autre, sont respectivement portées par la bride 10 et la porte 11. Pour faciliter le déplacement de la porte 11 entre ses positions fermée et ouverte, cette porte est par exemple équipée d'une poignée de manoeuvre 13, diamétralement opposée au mécanisme à charnière 12. La porte 21 est, quant à elle, montée sur la bride 20 de manière rotative entre ses positions fermée et ouverte : la liaison rotative entre la bride 20 et la porte 21 permet, de manière réversible, de les solidariser l'une à l'autre lorsque la porte est fermée et de les désolidariser l'une de l'autre pour ouvrir la porte 21 en autorisant son écartement vis-à-vis de la bride 20. En pratique, cette liaison rotative entre la bride 20 et la porte 21 est réalisée par des moyens de fixation ad hoc 22, qui sont connus en soi et non détaillés ici plus avant et qui, par exemple, sont constitués par un système de fixation à baïonnette dont les parties constitutives complémentaires sont respectivement portées par la bride 20 et la porte 21. Des spécifications plus précises d'un exemple, non limitatif, d'un tel système de fixation à baïonnette sont données dans EP 2 091 051 auquel le lecteur peut se reporter.

Les brides 10 et 20 sont équipées de moyens de connexion réversible de l'une avec l'autre, conçus pour, par le biais d'une manoeuvre rotative entre les brides, les assembler fixement l'une à l'autre et, par le biais d'une manoeuvre rotative entre les brides de sens inverse, les désassembler l'une de l'autre. Plus spécifiquement dans l'exemple de réalisation considéré sur les figures, les parties de ces moyens de connexion, appartenant respectivement à la bride 20 et à la bride 10, consistent en des pattes 24 et des rainures 14 de réception de ces pattes, comme détaillé ci-dessous.

Les pattes 24 de la bride 20, qui, ici, sont prévues en quatre exemplaires et dont certaines sont visibles sur les figures 4 à 6, 8 à 10, 12 à 14 et 16, sont saillantes à l'opposé de l'axe Z-Z depuis la périphérie extérieure de la bride 20, en étant réparties suivant cette périphérie extérieure de manière sensiblement régulière. Chacune des pattes 24 court de manière orthoradiale à l'axe Z-Z sur une portion de la périphérie extérieure de la bride 20, en étant séparée de la patte précédente et de la patte suivante, suivant cette périphérie extérieure, par des portions de la bride 20 dépourvues de saillie tournée à l'opposé de l'axe Z-Z. Les pattes 24 s'étendent globalement dans un même plan géométrique, perpendiculaire à l'axe Z-Z.

Les rainures 14 de la bride 10, qui sont prévues en autant d'exemplaires que les pattes 14 et dont certaines sont visibles sur les figures 1, 2, 4 à 6, 8 à 10, 12 à 14 et 16, sont creusées en direction opposée de l'axe Z-Z depuis la périphérie intérieure de la bride 10. Les rainures 14 sont réparties suivant la périphérie intérieure de la bride 10 de manière sensiblement régulière, en courant de manière orthoradiale à l'axe Z-Z sur des portions respectives de cette périphérie intérieure. Les rainures 14 s'étendent globalement dans un même plan géométrique, perpendiculaire à l'axe Z-Z. Chaque rainure 14 inclut successivement suivant une direction périphérique à l'axe Z-Z :
- une partie 14A, qui, comme visible sur les figures 4, 8, 12 et 16, est fermée sur les deux côtés axiaux de la bride 10 et qui présente une dimension, selon l'axe Z-Z, sensiblement égale à l'épaisseur, selon cet axe, des pattes 24 de sorte que les pattes y sont déplaçables de manière orthoradiale à l'axe Z-Z tout en étant sensiblement fixes selon cet axe, et
- une partie 14B, qui, comme visible sur les figures 1, 5, 9 et 13, est ouverte sur le côté axial de la bride 10 destiné à être tourné vers la bride 20 et est fermée sur le côté axial opposé de la bride 10, et qui présente une dimension, suivant une direction périphérique à l'axe Z-Z, égale ou supérieure à celle des pattes 24 de la bride 20 de sorte que ces pattes y sont déplaçables selon l'axe Z-Z.

Ces pattes 24 et ces rainures 14 forment conjointement un système à baïonnette établissant une liaison à baïonnette, centrée sur l'axe Z-Z, entre les brides 10 et 20, dans le sens où, pour connecter l'une à l'autre les brides 10 et 20 centrées sur l'axe Z-Z, chacune des pattes 24 est successivement :
- reçue dans la partie 14B d'une des rainures 14 par un rapprochement axial relatif des brides 10 et 20, en étant ainsi engagée de manière axiale dans cette partie 14B que l'on peut qualifier de partie d'engagement de la rainure, puis
- reçue dans la partie 14A de cette rainure par un déplacement relatif des brides 10 et 20 en rotation autour de l'axe Z-Z dans un sens donné, noté S1 sur les figures, en étant introduite de manière orthoradiale, tout en étant bloquée axialement, dans cette partie 14A que l'on peut qualifier de partie de verrouillage de la rainure.

En pratique, la partie de verrouillage 14A de chaque rainure 14 est, à son extrémité opposée, suivant une direction périphérique à l'axe Z-Z, à la partie d'engagement correspondante 14B, fermée par tout élément fixe approprié, tel qu'un pion 15 dans l'exemple de réalisation considéré sur les figures, contre lequel vient buter la patte associée 24 lorsque cette dernière est introduite au maximum dans la partie de verrouillage 14A, autrement dit lorsque la course rotative maximale entre la rainure et la patte aux fins de la connexion des brides 10 et 20 est réalisée.

La déconnexion des brides 10 et 20 s'effectue selon une cinématique inverse : chacune des pattes 24 est successivement retirée de la partie de verrouillage 14A de la rainure associée 14 par un déplacement relatif en rotation dans un sens S2, opposé au sens S1, puis retirée de la partie d'engagement 14B de la rainure associée par un écartement axial relatif des brides 10 et 20.

On comprend donc que les figures 1 à 4 montrent les brides 10 et 20 ainsi connectées l'une à l'autre, tandis que les groupes des figures 5 à 8, des figures 9 à 12 et des figures 13 à 16 montrent la déconnexion progressive des brides moyennant le déplacement en rotation, dans le sens S2, de la bride 20 par rapport à la bride 10.

On notera que, dans l'exemple de réalisation considéré ici, la bride 20 est pourvue d'une paire de poignées 23 diamétralement opposées, destinées à faciliter la manoeuvre rotative entre les brides 10 et 20.

Selon l'invention, la bride 10 est pourvue d'une rampe 16 visible sur les figures 1, 2, 4 à 6, 8 à 10, 12 et 16. Cette rampe 16 est agencée dans la partie d'engagement 14B d'une des rainures 14, plus précisément à l'extrémité de cette partie 14B, qui est opposée, suivant une direction périphérique à l'axe Z-Z, à la partie de verrouillage 14A de la rainure concernée 14. La rampe 16 délimite, sur son côté axial destiné à être tourné vers la bride 20, une surface 16A correspondant à une portion d'hélice, ici circulaire, qui est centrée sur l'axe Z-Z et qui s'enroule dans le sens S2. Autrement dit, sur le côté axial de la rampe 16 tourné vers la bride 20, la surface correspondante 16A de la rampe est hélicoïdale, en se rapprochant axialement de la bride 20 lorsqu'on parcourt cette surface hélicoïdale 16A dans le sens S2.

La rampe 16 est ainsi prévue sur la trajectoire de la patte 24 associée à la rainure 14 dans laquelle cette rampe 16 est intégrée, lorsque cette patte 24 est déplacée en rotation autour de l'axe Z-Z dans le sens S2 aux fins de la déconnexion des brides 10 et 20. En effet, comme montré successivement par les groupes respectifs des figures 1 à 4, 5 à 8, 9 à 12 et 13 à 16, lors du déplacement relatif des brides 10 et 20 en rotation dans le sens S2 pour déconnecter les brides, la patte 24, associée à la rainure 14 dans laquelle est intégrée la rampe 16, se rapproche progressivement de la rampe 16 au fur et à mesure de son retrait de la partie de verrouillage 14A de la rainure précitée, comme illustré par comparaison entre le groupe des figures 1 à 4 et le groupe des figures 1 à 8, jusqu'à venir en contact de la surface hélicoïdale 16A de la rampe 16, comme illustré par comparaison entre le groupe des figures 5 à 8 et le groupe des figures 9 à 12, surface hélicoïdale contre laquelle la patte précitée 24 glisse ensuite, comme illustré par comparaison entre le groupe des figures 9 à 12 et le groupe des figures 13 à 16. En glissant ainsi contre la surface 16A de la rampe 16 lors du déplacement en rotation, dans le sens S2, de la bride 20 par rapport à la bride 10, la patte précitée 24 force la bride 20 à s'écarter axialement de la bride 10, comme illustré par comparaison entre les figures 4, 8, 12 et 16, en amorçant ainsi l'écartement axial relatif des brides par lequel les pattes 24 se désengagent axialement des parties d'engagement 14B des rainures 14.

Avantageusement, on comprend que l'écartement axial relatif des brides 10 et 20 sous l'effet de la rampe 16 n'est réalisé qu'en fin de course rotative entre les brides lors de leur déplacement relatif en rotation dans le sens S2, typiquement dans la seconde moitié de la course rotative précitée, voire dans le troisième tiers de cette course rotative : de cette façon, tant que la bride 20 n'a pas atteint sa fin de course rotative dans le sens S2 par rapport à la bride 10, la rampe 16 n'a pas d'incidence sur le verrouillage axial des pattes 24 dans les rainures 14.

Sur la figure 17, le dispositif de connexion, décrit jusqu'ici en regard des figures 1 à 16, est mis en oeuvre dans un cas d'utilisation spécifique, à savoir dans le cas où l'enceinte E2 est un conteneur rigide 30, par exemple en acier inoxydable, prévu notamment pour le passage en autoclave. Ce cas d'utilisation, non limitatif de l'invention, permet d'illustrer la difficulté qu'un utilisateur aurait, en l'absence de la rampe 16, pour déconnecter les brides 10 et 20 lorsque celles-ci sont, en quelque sorte, « collées » l'une à l'autre par un effet ventouse, qui résulte typiquement de la mise en dépression des enceintes connectées entre elles et qui apparaît notamment entre des lèvres de leur joint. La rigidité du conteneur 30 empêche tout ajustement du volume interne de ce conteneur qui, lors de la déconnexion des brides 10 et 20, limiterait la résistance de l'effet ventouse précité. Grâce à la rampe 16, la résistance due à l'effet ventouse est surmontée sans difficulté par l'utilisateur, du fait que cette rampe écarte, selon l'axe Z-Z, les brides 10 et 20 l'une de l'autre lorsqu'elles sont déplacées en rotation l'une par rapport à l'autre dans le sens de leur déconnexion.

Divers aménagements et variantes au dispositif de connexion décrit jusqu'ici sont par ailleurs envisageables :
- de manière connue en soi, le dispositif de connexion comporte avantageusement des moyens de fixation réversibles l'une à l'autre des portes 11 et 21, notamment conçus pour, lors de la manoeuvre rotative entre les brides 10 et 20 visant à les connecter l'une à l'autre, assembler fixement l'une à l'autre les portes 11 et 21, tout en passant la porte 21 en position ouverte vis-à-vis de sa bride 20, autrement dit tout en désolidarisant la porte 21 vis-à-vis de la bride 20 dans l'exemple de réalisation décrit plus haut ; de tels moyens de fixation sont par exemple réalisés sous forme d'un système à baïonnette, dont les parties constitutives complémentaires sont respectivement portées par la porte 11 et la porte 21 ; des spécifications plus précises d'un exemple, non limitatif, de ce système à baïonnette sont données dans EP 2 091 051 auquel le lecteur peut se reporter ; bien entendu, à défaut de ces moyens de fixation, l'ouverture de la porte 21 est indépendante de l'ouverture de la porte 11 ;
- la forme de réalisation des différents systèmes à baïonnette décrits jusqu'ici, en particulier du système à baïonnette incluant les pattes 24 et les rainures 14, n'est pas limitative ; plus généralement, d'autres systèmes de connexion réversible peuvent être envisagés pour connecter/déconnecter les brides 10 et 20 l'une vis-à-vis de l'autre, du moment que ces systèmes de connexion sont, alors que les brides 10 et 20 sont centrées sur l'axe Z-Z, activés par un déplacement relatif des brides en rotation autour de cet axe dans un sens et neutralisés par un déplacement relatif des brides en rotation autour de cet axe dans le sens opposé ;
- plutôt que d'être intégrée au système à baïonnette incluant les pattes 24 et les rainures 14, la rampe 16 peut être agencée en d'autres zones de l'une des brides 10 et 20, du moment qu'une partie ad hoc de l'autre bride glisse contre cette rampe lors du déplacement relatif des brides en rotation aux fins de leur déconnexion, de manière à écarter, selon l'axe Z-Z, les brides 10 et 20 l'une de l'autre ; et/ou
- le dispositif de connexion peut être utilisé avec l'axe Z-Z à l'horizontale ou bien à la verticale.

## Revendications

1. Dispositif de connexion étanche entre deux enceintes, comprenant une première bride (10) et une seconde bride (20), qui :
- sont apte à être respectivement associées aux deux enceintes (E1, E2),
- portent chacune de manière mobile une porte de fermeture étanche (11, 21), et
- comportent des moyens (14, 24) de connexion réversible de l'une avec l'autre, adaptés pour, alors que les première et seconde brides sont sensiblement centrées sur un même axe (Z-Z), connecter les brides l'une à l'autre par un déplacement relatif des brides en rotation autour de l'axe dans un premier sens (S1) et déconnecter les brides l'une de l'autre par un déplacement relatif des brides en rotation autour de l'axe dans un second sens (S2) opposé au premier sens,
**caractérisé en ce que** la première bride (10) est pourvue d'une rampe d'écartement (16) contre laquelle la seconde bride (20) glisse de manière à forcer les brides à s'écarter axialement l'une de l'autre lors du déplacement relatif des brides en rotation dans le second sens (S2).

2. Dispositif suivant la revendication 1, **caractérisé en ce que** la rampe (16) de la première bride (10) délimite une surface (16A) de glissement pour la seconde bride (20), qui est sensiblement hélicoïdale, centrée sur l'axe (Z-Z).

3. Dispositif suivant l'une des revendications 1 ou 2, **caractérisé en ce que** la rampe (16) de la première bride (10) est prévue pour coopérer par glissement relatif avec la seconde bride (20) uniquement en fin de course entre les brides lors du déplacement relatif des brides en rotation dans le second sens (S2).

4. Dispositif suivant la revendication 3, **caractérisé en ce que** la rampe (16) de la première bride (10) est prévue pour coopérer par glissement relatif avec la seconde bride (20) uniquement dans la seconde moitié de la course entre les brides lors du déplacement relatif des brides en rotation dans le second sens (S2).

5. Dispositif suivant la revendication 3, **caractérisé en ce que** la rampe (16) de la première bride (10) est prévue pour coopérer par glissement relatif avec la seconde bride (20) uniquement dans le troisième tiers de la course entre les brides lors du déplacement relatif des brides en rotation dans le second sens (S2).

6. Dispositif suivant l'une quelconque des revendications précédentes, **caractérisé en ce que** les moyens de connexion réversible comprennent un système à baïonnette (14, 24), qui forme une liaison à baïonnette, centrée sur l'axe (Z-Z), entre les deux brides (10, 20) et qui intègre la rampe (16).

7. Dispositif suivant la revendication 6,
**caractérisé en ce que** le système à baïonnette inclut des pattes (24) de la seconde bride (20) et des rainures (14) délimitées par la première bride (10), les pattes étant respectivement reçues dans les rainures pour connecter les brides l'une à l'autre et retirées des rainures pour déconnecter les brides l'une de l'autre,
et **en ce que** la rampe (16) est agencée dans l'une des rainures (14) pour que la patte associée (24) glisse contre la rampe lors de son retrait de la rainure de manière à écarter axialement les brides (10, 20) l'une de l'autre.

8. Dispositif suivant la revendication 7,
**caractérisé en ce que** chaque rainure (14) inclut :
- une partie (14A) de verrouillage de la patte associée (24), dans laquelle cette patte est déplaçable de manière orthoradiale à l'axe (Z-Z) tout en étant sensiblement fixe selon cet axe, et
- une partie (14B) d'engagement de la patte associée, dans laquelle cette patte est déplaçable selon l'axe,
de sorte que, pour connecter les deux brides (10, 20) l'une à l'autre, chacune des pattes est successivement reçue dans la partie d'engagement (14B) de la rainure associée (14) par un rapprochement axial relatif des brides et reçue dans la partie de verrouillage (14A) de la rainure associée par le déplacement relatif des brides en rotation dans le premier sens (S1), tandis que, pour déconnecter les brides l'une de l'autre, chacune des pattes est successivement retirée de la partie de verrouillage de la rainure associée par le déplacement relatif en rotation dans le second sens (S2) et retirée de la partie d'engagement de la rainure associée par un écartement axial relatif des brides,
et **en ce que** la rampe (16) est agencée dans la partie d'engagement (14B) d'une des rainures (14), de sorte que la patte associée (24) glisse contre la rampe lors de son retrait de la partie de verrouillage (14A) de cette rainure, de manière à amorcer l'écartement axial relatif des brides (10, 20).

9. Dispositif suivant l'une quelconque des revendications précédentes, **caractérisé en ce que** l'une des deux enceintes (E1, E2) est un conteneur rigide (30), notamment prévu pour le passage en autoclave.

## Patentansprüche

1. Vorrichtung für eine dichte Verbindung zwischen zwei Einfassungen, die einen ersten Flansch (10) und einen zweiten Flansch (20) umfassen, die:
- geeignet sind, jeweils den zwei Einfassungen (E1, E2) zugeordnet zu werden,
- jeder in beweglicher Weise eine abdichtende Verschlusstür (11, 21) trägt, und
- Mittel (14, 24) zur reversiblen Verbindung miteinander aufweisen,
sobald der erste und zweite Flansch im Wesentlichen auf eine selbe Achse (Z-Z) zentriert sind, angepasst sind, die Flansche durch eine relative Drehbewegung der Flansche um die Achse in eine erste Richtung (S1) zu verbinden und die Flansche durch eine relative Drehbewegung der Flansche um die Achse in eine zweite Richtung (S2), entgegengesetzt zur ersten Richtung, voneinander zu lösen,
**dadurch gekennzeichnet, dass** der erste Flansch (10) mit einer Abstandsschräge (16) versehen ist, an der der zweite Flansch (20) gleitet, derart, dass die Flansche gezwungen werden, sich bei der relativen Drehbewegung der Flansche in die zweite Richtung (S2) axial voneinander zu entfernen.

2. Vorrichtung nach Anspruch 1, **dadurch gekennzeichnet, dass** die Rampe (16) des ersten Flansches (10) eine Gleitfläche (16A) für den zweiten Flansch (20) begrenzt, die im Wesentlichen spiralförmig und auf die Achse (Z-Z) zentriert ist.

3. Vorrichtung nach einem der Ansprüche 1 oder 2, **dadurch gekennzeichnet, dass** die Schräge (16) des ersten Flansches (10) vorgesehen ist, durch relatives Gleiten mit dem zweiten Flansch (20) nur am Ende des Weges zwischen den zwei Flanschen während der relativen Drehbewegung der Flansche in die zweite Richtung (S2) zusammenzuarbeiten.

4. Vorrichtung nach Anspruch 3, **dadurch gekennzeichnet, dass** die Schräge (16) des ersten Flansches (10) vorgesehen ist, durch relatives Gleiten mit dem zweiten Flansch (20) nur in der zweiten Hälfte des Weges zwischen den Flanschen während der relativen Drehbewegung der Flansche in die zweite Richtung (S2) zusammenzuarbeiten.

5. Vorrichtung nach Anspruch 3, **dadurch gekennzeichnet, dass** die Schräge (16) des ersten Flansches (10) vorgesehen ist, durch relatives Gleiten mit dem zweiten Flansch (20) nur in dem dritten Drittel des Weges zwischen den Flanschen während der relativen Drehbewegung der Flansche in die zweite Richtung (S2) zusammenzuarbeiten.

6. Vorrichtung nach einem beliebigen der vorhergehenden Ansprüche, **dadurch gekennzeichnet, dass** die Mittel zur reversiblen Verbindung ein Bajonettsystem (14, 24) umfassen, das eine auf die Achse (Z-Z) zentrierte Bajonettverbindung zwischen den zwei Flanschen (10, 20) bildet und das die Schräge (16) einbindet.

7. Vorrichtung nach Anspruch 6,
**dadurch gekennzeichnet, dass** das Bajonettsystem Zungen (24) des zweiten Flansches (20) und Nuten (14), die von dem ersten Flansch (10) begrenzt sind, einschließt, wobei die Zungen jeweils in den Nuten aufgenommen sind, um die Flansche miteinander zu verbinden, und aus den Nuten herausgezogen sind, um die Flansche voneinander zu lösen,
und dass die Schräge (16) in einer der Nuten (14) angeordnet ist, damit die zugeordnete Zunge (24) während ihres Zurückziehens aus der Nut an der Schräge gleitet, derart, dass die Flansche (10, 20) axial voneinander entfernt werden.

8. Vorrichtung nach Anspruch 7,
**dadurch gekennzeichnet, dass** jede Nut (14) einschließt:
- ein Verriegelungsteil (14A) der zugeordneten Zunge (24), in dem diese Zunge in orthoradialer Weise zur Achse (Z-Z) verschiebbar ist, wobei sie im Wesentlichen zu dieser Achse fest ist, und
- ein Eingreifteil (14B) der zugeordneten Zunge, in dem diese Zunge gemäß dieser Achse verschiebbar ist,
derart, dass zum Verbinden der zwei Flansche (10, 20) miteinander jede der Zungen aufeinanderfolgend in dem Eingreifteil (14B) der zugeordneten Nut (14) durch eine relative axiale Annäherung der Flansche aufgenommen wird und in dem Verriegelungsteil (14A) der zugeordneten Nut durch die relative Drehbewegung der Flansche in die erste Richtung (S1) aufgenommen wird, während zum Lösen der Flansche voneinander jede der Zungen aufeinanderfolgend von dem Verriegelungsteil der zugeordneten Nut durch die relative Drehbewegung in die zweite Richtung (S2) zurückgezogen wird und von dem Eingreifteil der zugeordneten Nut durch eine relative axiale Beabstandung der Flansche zurückgezogen wird,
und dass die Schräge (16) in dem Eingreifteil (14B) einer der Nuten (14) derart angeordnet ist, dass die zugeordnete Zunge (24) an der Schräge während ihres Zurückziehens aus dem Verriegelungsteil (14A) dieser Nut gleitet, um die relative axiale Beabstandung der Flansche (10, 20) einzuleiten.

9. Vorrichtung nach einem beliebigen der vorhergehenden Ansprüche, **dadurch gekennzeichnet, dass** eine der zwei Einfassungen (E1, E2) ein starrer Behälter (30) ist, der insbesondere für ein Laden in einen Autoklaven vorgesehen ist.

## Claims

1. Device for a sealed connection between two enclosures,
comprising a first flange (10) and a second flange (20), which:
- are capable of being respectively associated with the two enclosures (E1, E2),
- each movably bear a sealed closure door (11, 21), and
- comprise means (14, 24) for reversible connection with one another which are adapted, while the first and second flanges are substantially centred on the same axis (Z-Z), to connect the flanges to one another by a relative rotational movement of the flanges about the axis in a first direction (S1) and to disconnect the flanges from one another by a relative rotational movement of the flanges about the axis in a second direction (S2) opposite to the first direction, **characterised in that** the first flange (10) is provided with a distancing rail (16) against which the second flange (20) slides in such a manner as to force the flanges to become axially distant from one another during the relative rotational movement of the flanges in the second direction (S2).

2. Device according to claim 1, **characterised in that** the rail (16) of the first flange (10) defines a sliding surface (16A) for the second flange (20), which is substantially helicoidal, centred on the axis (Z-Z).

3. Device according to claim 1 or 2, **characterised in that** the rail (16) of the first flange (10) is provided to cooperate by relative sliding with the second flange (20) only at the end of travel between the flanges during the relative rotational movement of the flanges in the second direction (S2).

4. Device according to claim 3, **characterised in that** the rail (16) of the first flange (10) is provided to cooperate by relative sliding with the second flange (20) only in the second half of the travel between the flanges during the relative rotational movement of the flanges in the second direction (S2).

5. Device according to claim 3, **characterised in that** the rail (16) of the first flange (10) is provided to cooperate by relative sliding with the second flange (20) only in the third third of the travel between the flanges during the relative rotational movement of the flanges in the second direction (S2).

6. Device according to any one of the preceding claims, **characterised in that** the reversible connection means comprise a bayonet system (14, 24), which forms a bayonet connection, centred on the axis (Z-Z), between the two flanges (10, 20) and which incorporates the rail (16).

7. Device according to claim 6,
**characterised in that** the bayonet system includes tabs (24) of the second flange (20) and grooves (14) defined by the first flange (10), the tabs being respectively received in the grooves in order to connect the flanges to one another and withdrawn from the grooves in order to disconnect the flanges from one another, and **in that** the rail (16) is arranged in one of the grooves (14) so that the associated tab (24) slides against the rail while it is being withdrawn from the groove in such a manner as to axially distance the flanges (10, 20) from one another.

8. Device according to claim 7,
**characterised in that** each groove (14) includes:
- a portion (14A) for locking the associated tab (24), in which this tab can move orthoradially to the axis (Z-Z) while being substantially fixed on that axis, and
- a portion (14B) for engaging the associated tab, in which this tab is movable along the axis,
in such a manner that, in order to connect the two flanges (10, 20) to one another, each of the tabs is successively received in the engaging portion (14B) of the associated groove (14) by bringing the flanges axially closer together in relation to one another and received in the locking portion (14A) of the associated groove by the relative rotational movement of the flanges in the first direction (S1), whereas, in order to disconnect the flanges from one another, each of the tabs is successively withdrawn from the locking portion of the associated groove by the relative rotational movement in the second direction (S2) and withdrawn from the engaging portion of the associated groove by a relative axial distancing of the flanges,
and **in that** the rail (16) is arranged in the engaging portion (14B) of one of the grooves (14), in such a manner that the associated tab (24) slides against the rail while it is being withdrawn from the locking portion (14A) of that groove, in such a manner as to start the relative axial distancing of the flanges (10, 20).

9. Device according to any one of the preceding claims, **characterised in that** one of the enclosures (E1, E2) is a rigid container (30), in particular provided for autoclaving.
